# EUROPÄISCHE PATENTSCHRIFT

(11) **EP 2 770 554 B1**
(45) Veröffentlichungstag und Bekanntmachung des Hinweises auf die Patenterteilung: **08.04.2015**
(21) Anmeldenummer: 13154164.1
(22) Anmeldetag: 06.02.2013
(51) Int. Cl.: H01M 2/10, H01M 10/60, H01M 10/625, H01M 10/6567, H01M 10/52

(54) **Batteriesystem mit Absorptionsvorrichtung**
Battery system with an absorber device
Système de batterie avec dispositif d'absorption

(43) Veröffentlichungstag der Anmeldung: 27.08.2014
(73) Patentinhaber: MAGNA STEYR Battery Systems GmbH & Co OG, 8041 Graz (AT)
(72) Erfinder: DÄMON, Peter, 8301 Laßnitzhöhe (AT); EICHBERGER, Georg, 8044 Graz (AT); WÜNSCHE, Ralph, 8010 Graz (AT)
(74) Vertreter: Zangger, Bernd

(56) Entgegenhaltungen:
- EP-A1- 2 533 346
- DE-A1-102010 012 927

## Beschreibung

### Gebiet der Erfindung

Die vorliegende Erfindung betrifft ein Batteriesystem umfassend eine Vielzahl von Zellen in einem Batteriegehäuse, mit einer im Batteriegehäuse angeordneten Absorptionsvorrichtung durch die ausgetretenes Fluid im Batteriegehäuse gebunden werden kann.

### Stand der Technik

Batteriesysteme mit mehreren Zellen werden insbesondere als Energiespeicher für den Antrieb von Elektro- und Hybridfahrzeugen eingesetzt.

Um eine optimale Funktion des Batteriesystems zu gewährleisten ist es sinnvoll, die Temperatur der Zellen in einem gewünschten Betriebsbereich zu halten. Um Überschreitungen und/oder Unterschreitungen der Betriebstemperatur zu verhindern werden aktive oder passive Temperiersysteme eingesetzt. Besonders bewährt hat sich der Einsatz von flüssigem Temperiermittel das gut wärmeleitend, meist in einem Kühlkörper, an den Batteriezellen entlanggeführt wird.

Problematisch ist dabei jedoch, dass es, beispielsweise bei einem Unfall eines derart ausgestatteten Fahrzeuges, zu Leckagen und dadurch zum Austreten des Temperiermittels aus dem Kühlkörper kommen kann. Das Temperiermittel kann dann in direkten Kontakt mit den Batteriezellen gelangen und durch seine Leitfähigkeit einen Kurzschluss auslösen.

Zur Erhöhung der Betriebssicherheit von Batteriesystemen ist es bekannt, Absorptionsvorrichtungen vorzusehen, durch die ausgetretenes Fluid im Batteriegehäuse gebunden werden kann.

Aus der DE 10 2010 010 844 A1 ist ein Speichermodul mit einer Anzahl an Speicherzellen bekannt, wobei zur Aufnahme und Bindung auslaufenden Elektrolyts im Bereich eines Ventils, über das ein in einer Speicherzelle vorhandener Innendruck abgebaut werden und Elektrolyt austreten kann, eine saugfähige Schicht angeordnet ist. Die saugfähige Schicht kann eine doppellagige Strukturfolie umfassen und kann eine Mehrzahl voneinander abgegrenzter Taschen oder Polster aufweisen.

### Zusammenfassung der Erfindung

Es ist eine Aufgabe der Erfindung, Batteriesysteme umfassend eine Vielzahl von Zellen in einem Batteriegehäuse, mit einer im Batteriegehäuse angeordneten Absorptionsvorrichtung zu verbessern und insbesondere ein einfach und kostengünstig herstellbares Batteriesystem mit einer zuverlässigen Absorptionsvorrichtung anzugeben.

Die Lösung der Aufgabe erfolgt durch ein Batteriesystem umfassend eine Vielzahl von Zellen in einem Batteriegehäuse, mit einer im Batteriegehäuse angeordneten Absorptionsvorrichtung durch die ausgetretenes Fluid im Batteriegehäuse gebunden werden kann, wobei die Absorptionsvorrichtung absorbierende Elemente umfasst die zwischen den Innenseiten einer ersten und einer zweiten Materiallage aufgenommen sind, wobei die Materiallagen Taschen zur Aufnahme der absorbierenden Elemente ausbilden, wobei das Batteriesystem zumindest ein Stützelement umfasst, wobei das Stützelement sowohl zur Bildung der Taschen als auch zur Befestigung der Absorptionsvorrichtung am Batteriegehäuse ausgebildet ist. Erfindungsgemäß weist ein Batteriesystem daher ein Mittel auf, dass gleichzeitig dazu dient Taschen in den Materiallagen auszubilden, so dass absorbierende Elemente gezielt in der Absorptionsvorrichtung positioniert werden können, als auch dazu, die gesamte Absorptionsvorrichtung am Batteriegehäuse zu befestigen. Dazu bewirkt das eingesetzte Stützelement sowohl eine Befestigung der Absorptionsvorrichtung am Gehäuse als auch eine abschnittsweise Verbindung der ersten Materiallage mit der zweiten Materiallage, sodass zwischen diesen abschnittsweisen Verbindungen Taschen zur Aufnahme absorbierender Elemente ausgebildet werden.

Die Befestigung der Absorptionsvorrichtung am Batteriegehäuse kann unmittelbar über das Stützelement erfolgen oder auch mittelbar, über zusätzliche Befestigungsmittel.

Weiterbildungen der Erfindung sind in den abhängigen Ansprüchen, der Beschreibung sowie den beigefügten Zeichnungen angegeben.

Bevorzugt ist das Stützelement rahmenförmig oder gitterförmig ausgebildet. Dadurch kann das Stützelement rahmenförmig oder gitterförmig Verbindungen zwischen der ersten und zweiten Materiallage bewirken, sodass sich zwischen den rahmenförmigen oder gitterförmigen Verbindungsstellen der Materiallagen Taschen zur Aufnahme der absorbierenden Elemente ausbilden.

Bevorzugt ist die erste und/oder die zweite Materiallage durchlässig für das Fluid ausgebildet, besonders bevorzugt sind beide Materiallagen fluiddurchlässig ausgebildet, so dass das Fluid allseitig ungehindert zu den absorbierenden Elementen gelangen kann. Es kann auch nur eine der Materiallagen, beispielsweise die den Zellen zugewandte Materiallage, fluiddurchlässig ausgebildet sein, so dass ein Zulauf des Fluids ermöglicht, ein Ablauf aber erschwert wird. Die Materiallagen können auch nur abschnittsweise fluiddurchlässig ausgebildet sein. Bevorzugt ist die erste und/oder zweite Materiallage elastisch ausgeführt. Die Materiallagen können beispielsweise als Nylon-Gewebe ausgebildet sein.

Bevorzugt weist die erste Materiallage eine Dicke kleiner als 0,5 mm, insbesondere kleiner als 0,3 mm oder kleiner als 0,1 mm auf. Hierdurch kann die abschnittsweise Verbindung zwischen den Materiallagen vereinfacht werden, beispielsweise durch eine einfachere Durchdringung der Materiallagen durch Klebstoff.

Gemäß einer Ausführungsform weist die erste Materiallage abschnittsweise Durchgänge auf. Auch dies kann die abschnittsweise Verbindung zwischen den Materiallagen vereinfachen, da beispielsweise ein Klebstoff oder sonstiges Mittel zur Verbindung der beiden Materiallagen durch die Durchgänge ungehindert wirken kann. Je nach verwendetem Stützelement kann es auch vorteilhaft sein, wenn auch die zweite Materiallage abschnittsweise Durchgänge aufweist.

Bevorzugt ist das Stützelement in einer Einbaulage, beispielsweise in einem Fahrzeug, am Boden des Batteriegehäuses befestigt. Insbesondere kann das Stützelement durch Kleben oder Schweißen, oder auch durch Nieten oder Schrauben am Batteriegehäuse befestigt sein. Das Stützelement ist bevorzugt als separates Bauteil ausgeführt, kann aber auch einstückig mit dem Batteriegehäuse ausgebildet sein.

Gemäß einer Ausführungsform ist das Stützelement ein zwischen der Außenseite der ersten Materiallage und dem Batteriegehäuse angebrachtes beidseitiges Klebeelement, insbesondere beidseitige Klebefolie ist, wobei die erste Materiallage und der Klebstoff des Klebeelements so ausgebildet sind, dass der Klebstoff des Klebeelements zumindest abschnittsweise durch die erste Materiallage hindurch wirksam ist. Durch die Wirkung des Klebstoffs an der Innenseite der ersten Materiallage wird die erforderliche abschnittsweise Verbindung zwischen erster und zweiter Materiallage hergestellt, sodass eine Taschenbildung ermöglicht wird. Die Wirkung des Klebstoffs durch die erste Materiallage kann beispielsweise durch eine poröse Beschaffenheit der ersten Materiallage oder durch abschnittsweise Durchgänge bzw. Öffnungen in der ersten Materiallage sowie durch eine ausreichende Dicke der Klebeschicht ermöglicht sein.

Gemäß einer Ausführungsform kann auch zwischen der ersten Materiallage und der zweiten Materiallage abschnittsweise ein zweites beidseitiges Klebeelement, insbesondere eine zweite beidseitige Klebefolie, angebracht sein, sodass bereichsweise, beispielsweise an Verbindungslinien im Inneren eines vorgegebenen Rahmens die ein Gitter bilden, zusätzlich zum von außen wirkenden Klebstoff des Klebeelements das als Stützelement dient ein weiteres, zweites Klebeelement wirksam ist.

Gemäß einer Ausführungsform ist das Stützelement ein zwischen der Außenseite der ersten Materiallage und dem Batteriegehäuse angebrachter Rahmen, wobei zur Taschenbildung an der Außenseite der zweiten Materiallage ein Gegenrahmen angebracht ist, wobei der Rahmen und der Gegenrahmen miteinander verbindbar sind. Durch die Verbindung des Rahmens mit dem Gegenrahmen wird in den betroffenen Abschnitten auch die erste Materiallage mit der zweiten Materiallage verbunden und so eine Taschenbildung ermöglicht. Rahmen und Gegenrahmen können bevorzugt als Gitter und Gegengitter ausgebildet sein, so dass mit jeweils einem Element und Gegenelement bereits eine Vielzahl von Taschen gebildet werden können. Der Rahmen bzw. das Gitter und deren Gegenelemente können insbesondere starr ausgebildet sein.

Bevorzugt weist der Rahmen erste Fortsätze auf und der Gegenrahmen zweite Fortsätze, wobei die ersten und zweiten Fortsätze ineinander gesteckt sind. Die Bildung der Taschen erfolgt hierbei durch einfaches Einstecken eines Gegenrahmens oder Gegengitters in einen, beispielsweise bereits am Batteriegehäuse montierten Rahmen bzw. Gitter.

Der Rahmen und der Gegenrahmen bzw. Gitter und Gegengitter können alternativ oder zusätzlich auch miteinander verschweißt, verklebt, verschraubt, vernietet oder vernäht sein.

Der Rahmen kann auch durch das Batteriegehäuse ausgebildet sein. Der Gegenrahmen kann durch einen Kühlkörper ausgebildet sein.

Bevorzugt ist der Rahmen und/oder der Gegenrahmen aus Kunststoff oder aus Metall hergestellt, beispielsweise als Stanzgitter. Die Herstellung kann auch durch Spritzgießen erfolgen.

Bevorzugt sind die Zellen mittels Befestigungsabschnitten, beispielsweise Befestigungsleisten, in Einbaulage am Boden des Batteriegehäuses befestigt. Insbesondere liegen vorteilhaft die Unterkanten der Zellen höher als die absorbierenden Elemente. Dadurch kann aus den Zellen austretendes Fluid durch Schwerkraft zur Absorptionsvorrichtung gelangen.

Bevorzugt ist im Batteriegehäuse ein Kühlkörper angeordnet, der insbesondere zur Kühlung der Zellen mittels eines Kühlfluids eingerichtet sein kann. Der Kühlkörper, insbesondere von Kühlfluid durchströmte Kühlkanäle, liegen dann besonders bevorzugt in Einbaulage höher als die absorbierenden Elemente, so dass austretendes Kühlfluid einfach zur Absorptionsvorrichtung gelangen kann. Für die Anordnung der absorbierenden Elemente relativ zu den Kühlkanälen kann jedoch auch berücksichtigt werden, dass das Batteriesystem, beispielsweise wenn es in einem Fahrzeug verbaut ist, das bei einem Unfall auf dessen Dach zu liegen kommen kann, die Schwerkraft auch in anderen Richtungen wirken kann als vorgesehen.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer Absorptionsvorrichtung eines erfindungsgemäßen Batteriesystems von der Seite, entsprechend dem Schnitt A-A in Fig. 2.
- Fig. 2: ist eine schematische Darstellung der Absorptionsvorrichtung gem. Fig. 1 von unten.
- Fig. 3: ist eine schematische Darstellung der Absorptionsvorrichtung in einem Batteriegehäuse von oben.
- Fig. 4: ist eine schematische Darstellung gem. dem Schnitt A-A der Fig. 3 von der Seite.

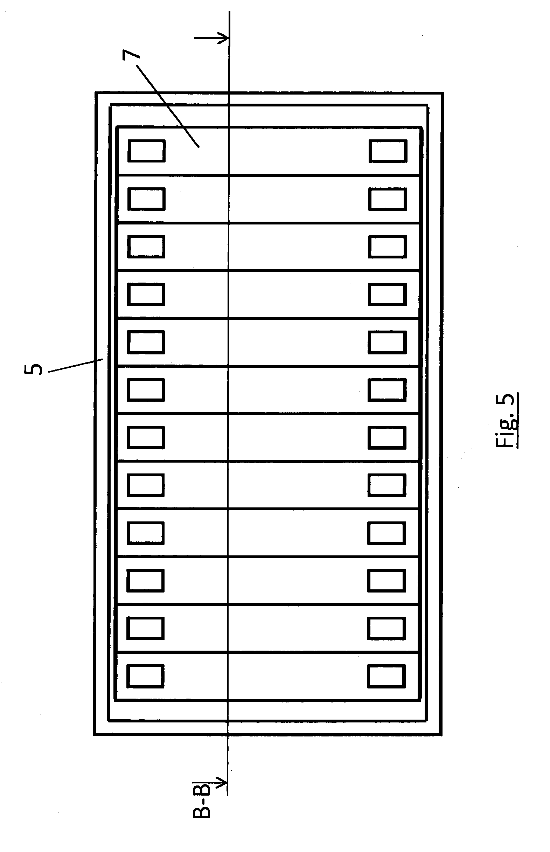

- Fig. 5: ist eine schematische Darstellung eines erfindungsgenäßen Batteriesystems mit Zellen von oben.
- Fig. 6: ist eine schematische Darstellung gem. dem Schnitt A-A der Fig. 5 von der Seite.
- Fig. 7: ist eine schematische Darstellung einer Absorptionsvorrichtung eines erfindungsgemäßen Batteriesystems von der Seite.

### Detaillierte Beschreibung der Erfindung

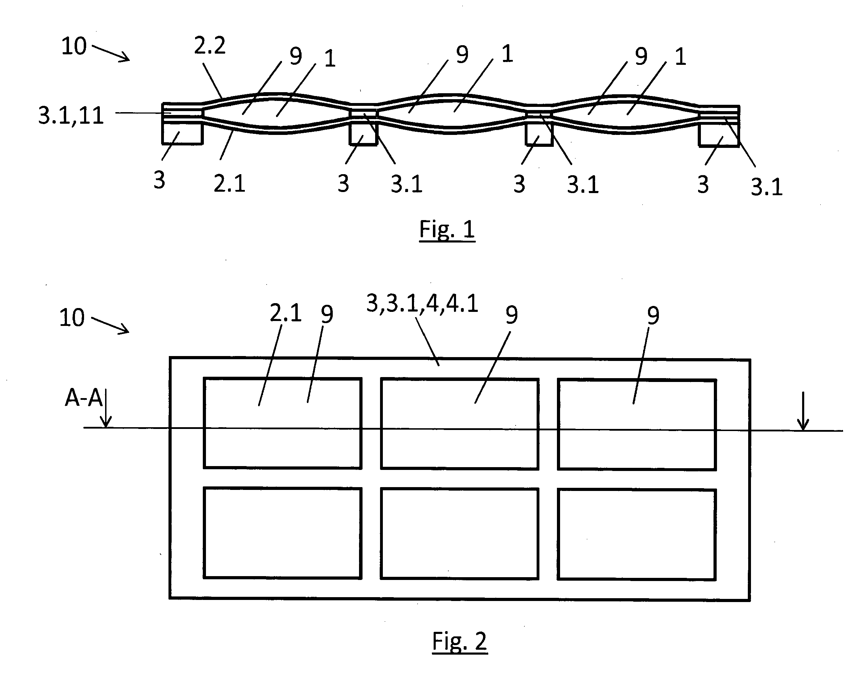

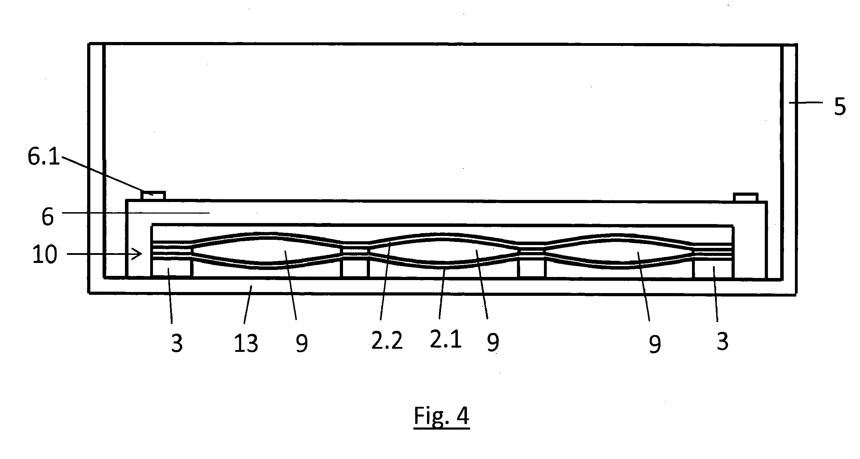

In den Fig. 1 bis 2 ist eine Absorptionsvorrichtung 10 eines erfindungsgemäßen Batteriesystems dargestellt, mit einer elastischen und fluiddurchlässigen ersten Materiallage 2.1 und einer zur ersten Materiallage 2.1 annähernd parallelen elastischen und fluiddurchlässigen zweiten Materiallage 2.2, wobei die erste und die zweite Materiallage 2.1, 2.2 abschnittsweise miteinander verbunden sind, so dass Taschen 9 ausgebildet werden. In den Taschen 9 sind jeweils, nicht näher dargestellte, absorbierende Elemente, beispielsweise als Vlies oder als Schüttgut aufgenommen. Die Taschen werden durch, in der Ebene der Materiallagen 2.1,2.2 gitterförmige Klebeelemente 3 an der Unterseite der ersten Materiallage 2.1 ausgebildet, da der Klebstoff 3.1 der Klebeelemente 3 durch die erste Materiallage 2.1 hindurchreicht und eine Verbindung mit der zweiten Materiallage 2.2 bewirkt. Die Verbindung der ersten Materiallage 2.1 mit der zweiten Materiallage 2.2 kann auch durch ein separates zweites beidseitiges Klebeelement 11 erfolgen. Die Klebeelemente 3 weisen auch an deren Unterseite Klebstoff zur Befestigung an einem Batteriegehäuse 5 auf (siehe Fig. 4), oder können mit anderen geeigneten Mitteln an einem Batteriegehäuse 5 befestigt sein. In der Darstellung der Fig. 2 kann das gitterförmige Stützelement sowohl ein Klebeelement 3 als auch ein Rahmen 4 sein.

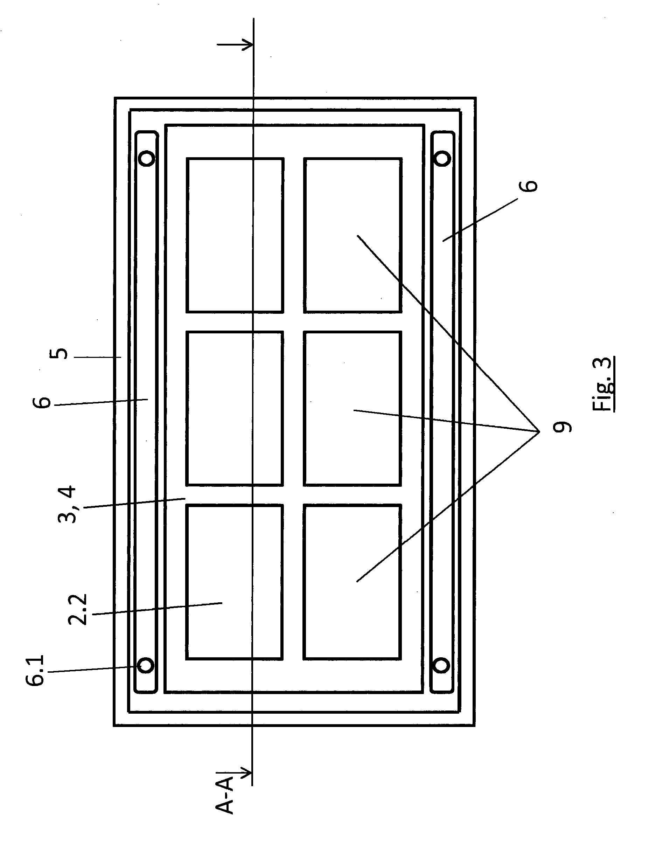

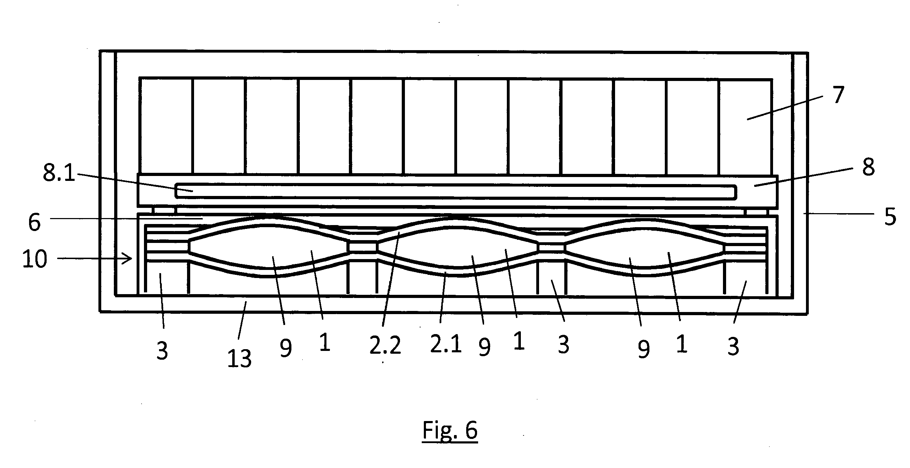

Wie in Fig. 3 und 4 gezeigt, kann eine Absorptionsvorrichtung 10 in einem Batteriegehäuse 5 derart angeordnet sein, dass sie einen großen Teil der Fläche über dem Boden des Batteriegehäuses 5 abdeckt. Die Klebeelemente 3 der Absorptionsvorrichtung 10 können dazu an das Batteriegehäuse 5 geklebt sein. Zur Befestigung von Zellen 7 und/oder eines Kühlkörpers 8 (siehe Fig. 6) sind ebenfalls am Batteriegehäuseboden montierte Befestigungsabschnitte 6, beispielsweise vom Boden erhöht montierte Befestigungsleisten, vorgesehen. Die Befestigungsleisten können Flanschflächen 6.1 aufweisen. Die Montage von Zellen 7 und Kühlkörper 8 erfolgt in Einbaurichtung oberhalb der absorbierenden Elemente 1 der Absorptionsvorrichtung 10, um beispielsweise ein Abfließen von ausgetretenem Fluid des Kühlkörpers 8 auf die absorbierenden Elemente 1 zu erleichtern.

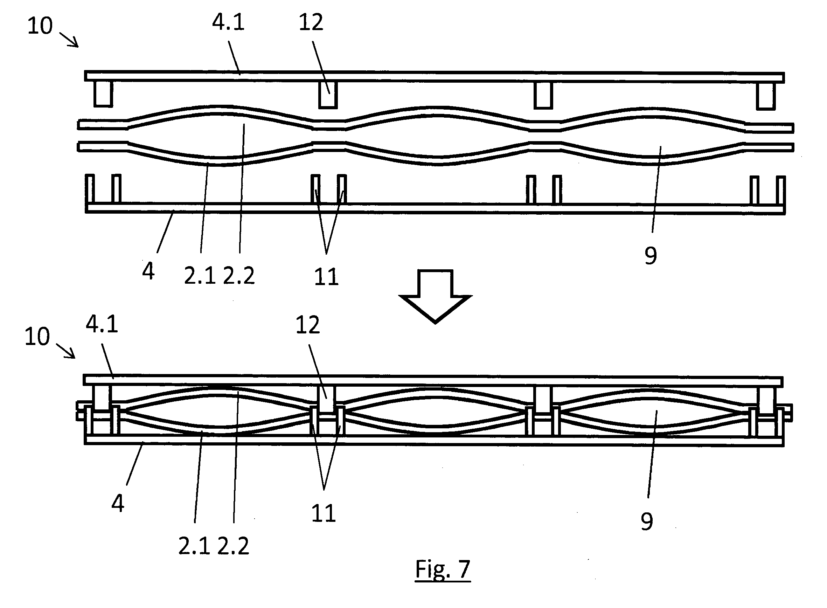

In Fig. 7 ist eine Ausführungsform der Erfindung dargestellt, in welcher das Stützelement ein zwischen der Außenseite der ersten Materiallage 2.1 und dem Batteriegehäuse 5 angebrachter Rahmen 4 ist, wobei zur Taschenbildung an der Außenseite der zweiten Materiallage 2.2 ein Gegenrahmen 4.1 angebracht ist. Der Rahmen 4 weist erste Fortsätze 11 auf und der Gegenrahmen 4.1 zweite Fortsätze 12. Die ersten und zweiten Fortsätze 11, 12 sind ineinander steckbar sodass der Rahmen 4 und der Gegenrahmen 4.1 miteinander verbindbar sind. Im oberen Teil der Fig. 7 sind Rahmen 4 und Gegenrahmen 4.1 noch nicht ineinander gesteckt, so dass die Materiallagen 2.1 und 2.2 noch nicht abschnittsweise miteinander verbunden sind und Taschen 9 noch nicht ausgebildet sind. Im unteren Teil der Fig. 7 ist die Bildung der Taschen 9 durch ineinanderstecken von Rahmen 4 und Gegenrahmen 4.1 erfolgt. Der Rahmen 4 ist mit geeigneten Mitteln am Boden eines Batteriegehäuses 5 befestigt (nicht dargestellt). Der Rahmen 4 kann auch durch das Batteriegehäuse 5 ausgebildet sein. Der Gegenrahmen 4.1 kann auch durch den Kühlkörper 8 ausgebildet sein.

Die Erfindung gibt somit ein einfaches und kostengünstig herstellbares Batteriesystem mit einer zuverlässigen Absorptionsvorrichtung an.

### Bezugszeichenliste

- 1: absorbierende Elemente
- 2.1: erste Materiallage
- 2.2: zweite Materiallage
- 3: Klebeelement
- 3.1: Klebstoff
- 4: Rahmen
- 4.1: Gegenrahmen
- 5: Batteriegehäuse
- 6: Befestigungsabschnitt
- 6.1: Flanschflächen
- 7: Zellen
- 8: Kühlkörper
- 8.1: Kühlkanal
- 9: Tasche
- 10: Absorptionsvorrichtung
- 11: zweites beidseitiges Klebeelement

## Patentansprüche

1. Batteriesystem umfassend eine Vielzahl von Zellen (7) in einem Batteriegehäuse (5), mit einer im Batteriegehäuse (5) angeordneten Absorptionsvorrichtung (10) durch die ausgetretenes Fluid im Batteriegehäuse (5) gebunden werden kann, wobei die Absorptionsvorrichtung (10) absorbierende Elemente (1) umfasst die zwischen den Innenseiten einer ersten und einer zweiten Materiallage (2.1, 2.2) aufgenommen sind, **dadurch gekennzeichnet, dass** die Materiallagen (2.1, 2.2) Taschen (9) zur Aufnahme der absorbierenden Elemente (1) ausbilden,
wobei das Batteriesystem zumindest ein Stützelement (3, 4) umfasst, wobei das Stützelement (3, 4) sowohl zur Bildung der Taschen (9) als auch zur Befestigung der Absorptionsvorrichtung (10) am Batteriegehäuse (5) ausgebildet ist.

2. Batteriesystem nach Anspruch 1,
**dadurch gekennzeichnet,** dass das Stützelement (3, 4) rahmenförmig oder gitterförmig ausgebildet ist.

3. Batteriesystem nach Anspruch 1 oder 2,
**dadurch gekennzeichnet**, dass die erste und/oder die zweite Materiallage (2.1, 2.2) durchlässig für das Fluid ausgebildet ist.

4. Batteriesystem nach zumindest einem der vorhergehenden Ansprüche,
**dadurch gekennzeichnet**, dass die erste Materiallage (2.1) eine Dicke kleiner als 0,5 mm, insbesondere kleiner als 0,3 mm oder kleiner als 0,1 mm aufweist.

5. Batteriesystem nach zumindest einem der vorhergehenden Ansprüche,
**dadurch gekennzeichnet**, dass die erste Materiallage (2.1) abschnittsweise Durchgänge aufweist.

6. Batteriesystem nach zumindest einem der vorhergehenden Ansprüche,
**dadurch gekennzeichnet**, dass das Stützelement (3, 4) in Einbaulage am Boden des Batteriegehäuses (5) befestigt ist, insbesondere durch Kleben oder Schweißen.

7. Batteriesystem nach zumindest einem der vorhergehenden Ansprüche,
**dadurch gekennzeichnet**, dass das Stützelement (3, 4) ein zwischen der Außenseite der ersten Materiallage (2.1) und dem Batteriegehäuse (5) angebrachtes beidseitiges Klebeelement (3), insbesondere eine beidseitige Klebefolie ist, wobei die erste Materiallage (2.1) und der Klebstoff (3.1) des Klebeelements (3) so ausgebildet sind, dass der Klebstoff (3.1) des Klebeelements (3) zumindest abschnittsweise durch die erste Materiallage (2.1) hindurch wirksam ist.

8. Batteriesystem nach Anspruch 7,
**dadurch gekennzeichnet**, dass zwischen der ersten Materiallage (2.1) und der zweiten Materiallage (2.2) abschnittsweise ein zweites beidseitiges Klebeelement (11), insbesondere eine zweite beidseitige Klebefolie, angebracht ist.

9. Batteriesystem nach zumindest einem der Ansprüche 1 bis 6,
**dadurch gekennzeichne**t, dass das Stützelement (3, 4) ein zwischen der Außenseite der ersten Materiallage (2.1) und dem Batteriegehäuse (5) angebrachter Rahmen (4) ist, wobei zur Taschenbildung an der Außenseite der zweiten Materiallage (2.2) ein Gegenrahmen (4.1) angebracht ist, wobei der Rahmen (4) und der Gegenrahmen (4.1) miteinander verbindbar sind.

10. Batteriesystem nach Anspruch 9,
**dadurch gekennzeichnet,** dass der Rahmen (4) erste Fortsätze (11) aufweist und der Gegenrahmen (4.1) zweite Fortsätze (12) aufweist, wobei die ersten und zweiten Fortsätze (11, 12) ineinander gesteckt sind.

11. Batteriesystem nach Anspruch 9,
**dadurch gekennzeichne**t, dass der Rahmen (4) und der Gegenrahmen (4.1) miteinander verschweißt, verklebt, verschraubt, vernietet oder vernäht sind, oder durch Rastnasen miteinander verbunden sind.

12. Batteriesystem nach einem der Ansprüche 9 bis 11,
**dadurch gekennzeichnet,** dass der Rahmen (4) durch das Batteriegehäuse (5) gebildet ist.

13. Batteriesystem nach einem der Ansprüche 9 bis 12,
**dadurch gekennzeichnet,** dass der Gegenrahmen (4.1) durch einen Kühlkörper (8) gebildet ist.

14. Batteriesystem nach zumindest einem der vorhergehenden Ansprüche,
**dadurch gekennzeichnet**, dass die Zellen (7) mittels Befestigungsabschnitten (6) in Einbaulage am Boden (13) des Batteriegehäuses (5) befestigt sind, wobei insbesondere die Unterkanten der Zellen (7) höher liegen, als die absorbierenden Elemente (1).

15. Batteriesystem nach zumindest einem der vorhergehenden Ansprüche,
**dadurch gekennzeichnet**, dass im Batteriegehäuse (5) ein Kühlkörper (8) angeordnet ist, wobei insbesondere der Kühlkörper (8) in Einbaulage höher liegt, als die absorbierenden Elemente (1).

## Claims

1. Battery system comprising a multiplicity of cells (7) in a battery housing (5), having an absorber device (10) which is arranged in the battery housing (5) and by means of which fluid that has escaped in the battery housing (5) can be bound, the absorber device (10) comprising absorbing elements (1) that are accommodated between the inner faces of a first and a second material ply (2.1, 2.2), **characterized in that** the material plies (2.1, 2.2) form pockets (9) for receiving the absorbing elements (1), the battery system comprising at least one support element (3, 4), the support element (3, 4) being designed both to form the pockets (9) and to fasten the absorber device (10) to the battery housing (5).

2. Battery system according to Claim 1,
**characterized in that** the support element (3, 4) is frame-shaped or grid-shaped.

3. Battery system according to Claim 1 or 2,
**characterized in that** the first and/or the second material ply (2.1, 2.2) is/are permeable for the fluid.

4. Battery system according to at least one of the preceding claims,
**characterized in that** the first material ply (2.1) has a thickness less than 0.5 mm, in particular less than 0.3 mm or less than 0.1 mm.

5. Battery system according to at least one of the preceding claims,
**characterized in that** the first material ply (2.1) has apertures over portions.

6. Battery system according to at least one of the preceding claims,
**characterized in that** the support element (3, 4) is fastened to the base of the battery housing (5), in particular by adhesive bonding or welding, in the installation position.

7. Battery system according to at least one of the preceding claims,
**characterized in that** the support element (3, 4) is a two-sided adhesive element (3), in particular a two-sided adhesive film, attached between the outer face of the first material ply (2.1) and the battery housing (5), the first material ply (2.1) and the adhesive (3.1) of the adhesive element (3) being formed such that the adhesive (3.1) of the adhesive element (3) is effective, at least over portions, through the first material ply (2.1).

8. Battery system according to Claim 7,
**characterized in that** a second two-sided adhesive element (11), in particular a second two-sided adhesive film, is attached between the first material ply (2.1) and the second material ply (2.2).

9. Battery system according to at least one of the Claims 1 to 6,
**characterized in that** the support element (3, 4) is a frame (4) attached between the outer face of the first material ply (2.1) and the battery housing (5), a counter frame (4.1) being attached to the outer face of the second material ply (2.2) for the formation of pockets, the frame (4) and the counter frame (4.1) being interconnectable.

10. Battery system according to Claim 9,
**characterized in that** the frame (4) has first extensions (11) and the counter frame (4.1) has second extensions (12), the first and second extensions (11, 12) being plugged into one another.

11. Battery system according to Claim 9,
**characterized in that** the frame (4) and the counter frame (4.1) are welded, adhesively bonded, screwed, riveted or sewn to one another, or are interconnected by detent lugs.

12. Battery system according to one of Claims 9 to 11,
**characterized int hat** the frame (4) is formed by the battery housing (5).

13. Battery system according to one of Claims 9 to 12,
**characterized in that** the counter frame (4.1) is formed by a heat sink (8).

14. Battery system according to at least one of the preceding claims,
**characterized in that** the cells (7) are fastened to the base (13) of the battery housing (5) by means of fastening portions (6) in the installation position, the lower edges of the cells (7) in particular being arranged higher than the absorbing elements (1).

15. Battery system according to at least one of the preceding claims,
**characterized in that** a heat sink (8) is arranged in the battery housing (5), in particular the heat sink (8) being arranged higher than the absorbing elements (1) in the installation position.

## Revendications

1. Système de batterie comportant une pluralité de cellules (7) dans un boîtier de batterie (5), comprenant un dispositif d'absorption (10) disposé dans le boîtier de batterie (5), au moyen duquel dispositif d'absorption du fluide qui s'est échappé peut être retenu dans le boîtier de batterie (5), le dispositif d'absorption (10) comportant des éléments absorbants (1) qui sont reçus entre les côtés intérieurs d'une première et d'une deuxième couche de matériau (2.1, 2.2), **caractérisé en ce que** les couches de matériau (2.1, 2.2) forment des cavités (9) pour recevoir les éléments absorbants (1), le système de batterie comportant au moins un élément de support (3, 4), l'élément de support (3, 4) étant réalisé à la fois pour la formation des cavités (9) et pour la fixation du dispositif d'absorption (10) au boîtier de batterie (5).

2. Système de batterie selon la revendication 1,
**caractérisé en ce que** l'élément de support (3, 4) est réalisé en forme de cadre ou en forme de grille.

3. Système de batterie selon la revendication 1 ou 2,
**caractérisé en ce que** la première et/ou la deuxième couche de matériau (2.1, 2.2) est/sont réalisée(s) de manière perméable au fluide.

4. Système de batterie selon au moins l'une quelconque des revendications précédentes,
**caractérisé en ce que** la première couche de matériau (2.1) présente une épaisseur inférieure à 0,5 mm, en particulier inférieure à 0,3 mm ou inférieure à 0,1 mm.

5. Système de batterie selon au moins l'une quelconque des revendications précédentes,
**caractérisé en ce que** la première couche de matériau (2.1) comprend des passages dans certaines portions.

6. Système de batterie selon au moins l'une quelconque des revendications précédentes,
**caractérisé en ce que** l'élément de support (3, 4) est fixé au fond du boîtier de batterie (5) dans la position d'installation, en particulier par collage ou soudage.

7. Système de batterie selon au moins l'une quelconque des revendications précédentes,
**caractérisé en ce que** l'élément de support (3, 4) est un élément adhésif à double face, en particulier une feuille adhésive à double face, attaché(e) entre le côté extérieur de la première couche de matériau (2.1) et le boîtier de batterie (5), la première couche de matériau (2.1) et l'adhésif (3.1) de l'élément adhésif (3) étant réalisés de telle sorte que l'adhésif (3.1) de l'élément adhésif (3) soit, au moins dans certaines portions, effectif à travers la première couche de matériau (2.1).

8. Système de batterie selon la revendication 7,
**caractérisé en ce qu'**un deuxième élément adhésif à double face (11), en particulier une deuxième feuille adhésive à double face, est attaché(e), dans certaines portions, entre la première couche de matériau (2.1) et la deuxième couche de matériau (2.2).

9. Système de batterie selon au moins l'une quelconque des revendications 1 à 6,
**caractérisé en ce que** l'élément de support (3, 4) est un cadre (4) attaché entre le côté extérieur de la première couche de matériau (2.1) et le boîtier de batterie (5), un cadre conjugué (4.1) étant attaché au côté extérieur de la deuxième couche de matériau (2.2) pour la formation de cavités, le cadre (4) et le cadre conjugué (4.1) pouvant être reliés l'un à l'autre.

10. Système de batterie selon la revendication 9,
**caractérisé en ce que** le cadre (4) comprend des premières saillies (11) et le cadre conjugué (4.1) comprend des deuxièmes saillies (12), les premières et les deuxièmes saillies (11, 12) étant enfichées les unes dans les autres.

11. Système de batterie selon la revendication 9,
**caractérisé en ce que** le cadre (4) et le cadre conjugué (4.1) sont soudés, collés, vissés, rivés ou cousus l'un à l'autre, ou sont reliés l'un à l'autre au moyen d'ergots d'encliquetage.

12. Système de batterie selon l'une quelconque des revendications 9 à 11,
**caractérisé en ce que** le cadre (4) est formé par le boîtier de batterie (5).

13. Système de batterie selon l'une quelconque des revendications 9 à 12,
**caractérisé en ce que** le cadre conjugué (4.1) est formé par un corps de refroidissement (8).

14. Système de batterie selon au moins l'une quelconque des revendications précédentes,
**caractérisé en ce que** les cellules (7) sont fixées au fond (13) du boîtier de batterie (5) dans la position d'installation au moyen de portions de fixation (6), les arêtes inférieures des cellules (7) étant en particulier situées plus haut que les éléments absorbants (1).

15. Système de batterie selon au moins l'une quelconque des revendications précédentes,
**caractérisé en ce qu'**un corps de refroidissement (8) est disposé dans le boîtier de batterie (5), le corps de refroidissement (8) se situant en particulier plus haut que les éléments absorbants (1) dans la position d'installation.
